# EUROPÄISCHE PATENTSCHRIFT

(11) **EP 3 777 503 B1**
(45) Veröffentlichungstag und Bekanntmachung des Hinweises auf die Patenterteilung: **27.12.2023**
(21) Anmeldenummer: 20401044.1
(22) Anmeldetag: 05.08.2020
(51) Int. Cl.: A01C 7/08

(54) **LANDWIRTSCHAFTLICHE PNEUMATISCHE VERTEILMASCHINE**
AGRICULTURAL PNEUMATIC DISTRIBUTOR
MACHINE D'ÉPANDAGE PNEUMATIQUE AGRICOLE

(30) Priorität: 14.08.2019 DE 102019121847
(43) Veröffentlichungstag der Anmeldung: 17.02.2021
(73) Patentinhaber: Amazonen-Werke H. Dreyer SE & Co. KG, 49205 Hasbergen (DE)
(72) Erfinder: WIEN, Thomas, 28816 Stuhr (DE); FLUCKE, Jan, 27798 Hude (DE)

(56) Entgegenhaltungen:
- EP-A1- 0 674 830
- EP-A2- 0 309 608
- WO-A1-97/21338
- WO-A1-2007/006733

## Beschreibung

Die Erfindung betrifft eine landwirtschaftliche pneumatische Verteilmaschine gemäß dem Oberbegriff des Patentanspruches 1.

In einer Vielzahl von Anwendungsfällen, insbesondere in der Landwirtschaft, werden Verteilmaschinen, insbesondere pneumatische Verteilmaschinen, zum Ausbringen von granularem Material auf einer landwirtschaftlichen Fläche eingesetzt. Bei dem granularen Material kann es sich insbesondere um Saatgut und/oder Düngemittel handeln. Zur Bevorratung des granularen Materials, weisen derartige Verteilmaschinen zumindest einen zentralen Vorratsbehälter auf, von dem aus das granulare Material über eine pneumatische Fördereinrichtung auf der landwirtschaftlichen Fläche ausbringbar ist. Durch ein Gebläse ist hierbei ein Strömungsfluss innerhalb der Fördereinrichtung generierbar, der dazu dient, dass granulare Material in Form eines Luft-Material-Gemisches durch die pneumatische Fördereinrichtung zu transportieren. Darüber hinaus umfassen gattungsgemäße Fördereinrichtungen zumindest ein Dosierorgan, welches mit dem Vorratsbehälter verbunden ist, und zumindest einen Verteilerkopf. Mittels zumindest einer Zuführleitung, über die der Verteilerkopf und das Dosierorgan miteinander verbunden sind, ist das granulare Material in einstellbaren Mengen zum Verteilerkopf zuführbar. Der Verteilerkopf weist hierbei mehrere radial angeordnete Ausgangsöffnungen und daran anschließende Ausbringleitungen auf, über die das granulare Material zu Ausbringelementen, insbesondere Säund/oder Düngescharen, zuführbar und auf der landwirtschaftlichen Fläche ablegbar ist. Die Ausbringelemente erstrecken sich hierbei typischerweise in gleichen Abständen zueinander quer zur Fahrtrichtung der Verteilmaschine.

Während des Ausbringprozesses bestehen regelmäßig Situationen in denen es erforderlich ist, dass die Saatgutausbringung zumindest in einigen Bereichen der landwirtschaftlichen Fläche unterbrechbar ist. Hierzu zählen beispielsweise Bereiche des Vorgewendes und/oder der Fahrgassen, in denen Überlappungen zu vermeiden sind. Gattungsgemäße Verteilmaschinen weisen üblicherweise Absperrungen zwischen dem Verteilerkopf und den einzelnen Ausbringelementen auf. Die Absperrungen sind hierbei entsprechend einer angestrebten Verteilcharakteristik in einer Reihenabschaltung zu- bzw. abschaltbar.

Eine derartige landwirtschaftliche pneumatische Verteilmaschine ist in der DE 10 2017 113 487 A1 beschrieben. Der innerhalb der Verteilmaschine angeordnete, zumindest teilweise kreisförmig ausgebildete, Verteilerkopf umfasst neben einer Zuführleitung, die den Vorratsbehälter mit dem Verteilerkopf verbindet, mehrere radial angeordnete Ausgangsöffnungen und daran sich anschließende Ausbringleitungen. Des Weiteren ist zumindest einigen der einzelnen Ausgangsöffnungen und/oder den daran anschließenden Ausbringleitungen jeweils zumindest ein Umschaltelement zugeordnet. Das Umschaltelement ist hierbei dazu eingerichtet, den Zufluss des granularen Materials zum Ausbringelement zu unterbrechen. Hierzu ist das Umschaltelement zwischen zumindest einer geöffneten und/oder einer geschlossenen Stellung mittels einer Schwenkwelle, die eine im Wesentlichen horizontale Schwenkachse aufweist, verschwenkbar. Die Schwenkwellen der Umschaltelemente benachbarter Ausgangsöffnungen und/oder Ausbringleitungen sind in einem Winkel versetzt zueinander angeordnet und über jeweils einen individuellen Aktor betätigbar.

Aus der WO 2007/006733 A1 ist außerdem ein Koppelelement bekannt geworden, über das zumindest zwei Umschaltelemente von jeweils zumindest zwei der mehreren Ausgangsöffnungen gemeinsam verschwenkbar sind Da landwirtschaftliche Verteilmaschinen typischerweise sehr hohe Arbeitsbreiten und damit eine hohe Anzahl an Ausbringelementen, insbesondere Sä- und/oder Düngerscharen, aufweisen, bedarf dies gleichzeitig einer hohen Anzahl an einzelnen Ausgangsöffnungen und/oder Ausbringleitungen, die eine Zuführung des granularen Materials vom Verteilerkopf zu den Ausbringelementen zulassen. Zur Beeinflussung der Verteilcharakteristik bedarf dies wiederrum einer hohen Anzahl an Umschaltelementen und somit auch Aktoren, welche jeweils ein Umschaltelemente betätigen, insbesondere verschwenken. Aus der hohen Anzahl an Aktoren resultiert wiederrum ein hoher Investitionsbedarf für die landwirtschaftliche Verteilmaschine. Darüber hinaus birgt eine hohe Anzahl an Aktoren die Gefahr einer erhöhten Ausfallrate, welche wiederrum hohe Reparaturkosten und/oder Reparaturstillstände verursacht.

Die der Erfindung zugrunde liegende Aufgabe besteht somit darin, einen Verteilerkopf mit präziser Reihenabschaltung zu schaffen, welcher kostengünstig herstellbar und/oder betreibbar ist.

Diese Aufgabe wird gelöst durch eine Verteilmaschine mit den Merkmalen nach Anspruch 1.

Die Erfindung macht sich die Erkenntnis zunutze, dass durch eine unmittelbare Kopplung der jeweiligen Schwenkwellen benachbarter Umschaltelementen, mittels des erfindungsgemäßen Koppelelementes, eine sehr betriebssichere und zumindest nahezu synchrone Absperrung der Ausgangsöffnungen und/oder Ausbringleitungen gegen einen Ausbringstrom von granularem Material erreichbar ist. Darüber hinaus ist das Koppelelement dazu eingerichtet, die benachbarten Schwenkwellen drehmomentübertragend miteinander zu verbinden. Somit sind die über ein Koppelelement verbundenen Umschaltelemente besonders präzise beispielsweise in Randbereichen oder Fahrgassen auf landwirtschaftlichen Flächen verschwenkbar. Darüber hinaus sind besonders platzsparende und/oder kompakte Ausführungsformen der gesamten Mechanik zur Betätigung der Umschaltelemente realisierbar. Dies wird dadurch erreicht, dass keine direkte Verbindung des zumindest einen Betätigungselementes, insbesondere Aktoren, mit jedem einzelnen Umschaltelement notwendig ist. Die Kopplung der Umschaltelemente ist so ausführbar, dass zumindest nur eines der mehreren Umschaltelemente mit dem Aktor direkt gekoppelt ist.

In einer vorteilhaften Ausgestaltung ist eine Baugruppe, die aus zumindest einer Schwenkwelle und zumindest einem Umschaltelement gebildet ist, durch zumindest zwei verschiedene Ausführungsformen realisierbar. In der ersten möglichen differentialen Ausführungsform sind die Schwenkwelle und das Umschaltelement so ausgebildet, dass diese zwar voneinander getrennt als eigenständige Bauteile ausführbar sind, jedoch kraftübertragend miteinander verbunden sind. In einer zweiten integralen Ausführungsform sind die Schwenkwelle und das Umschaltelement zu einem Bauteil zusammengefasst. Die Schwenkwelle ist hierbei im Umschaltelement direkt integriert.

In einer bevorzugten Ausführungsform ist das Koppelelement als die Schwenkwellen drehfest miteinander verbindendes Mittel ausgebildet. Hierbei resultiert aus der Drehbewegung der von dem Aktor betätigten Schwenkwelle eine nahezu verlustfreie Drehmomentübertragung und somit eine Übertragung der Drehbewegung auf zumindest eine weitere Schwenkwelle eines weiteren Umschaltelementes. Das Koppelelement ist hierbei fest oder vorzugsweise lösbar mit zumindest einer Schwenkwelle verbunden. Hierbei ist bevorzugt, dass die Verbindung zwischen dem Koppelelement und zumindest einer Schwenkwelle zumindest eines Umschaltelementes außerhalb der Ausgangsöffnung und/oder der Ausbringleitung angeordnet ist. Hieraus resultiert ein modularer Aufbau der den Vorteil aufweist, dass die erfindungsgemäße Kopplung zumindest zweier Umschaltelemente besonders einfach nachrüstbar und/oder austauschbar ist.

Das Koppelelement kann hierbei vorzugsweise aus einem metallischen und/oder nichtmetallischen Werkstoff bestehen, wobei bei einem nichtmetallischen Werkstoff eine Ausführung aus einem Kunststoffmaterial bevorzugt ist.

Bei einer weiteren besonders bevorzugten Ausführungsform des erfindungsgemäßen Verteilerkopfes ist das Koppelelement einteilig oder aus zumindest zwei Teilen gebildet die vorzugsweise formschlüssig miteinander verbunden sind. Dadurch wird erreicht, dass das Koppelelement besonders robust ausführbar und weniger anfällig gegenüber beispielsweise äußeren Einflüssen und/oder Vibrationen und/oder Verschmutzungen ist. Darüber hinaus erlaubt die zumindest zweiteilige Ausführungsform einerseits einen besonders hohen Winkelversatz der zumindest zwei miteinander gekoppelten Schwenkwellen zueinander und andererseits weist diese eine besonders hohe Robustheit auf. Durch die formschlüssige Verbindung der mehrteiligen Ausführungsform ist eine hinsichtlich verschleißbedingten Abnutzungen und/oder Beschädigungen besonders sichere Ausgestaltung erreichbar. Außerdem ist die formschlüssige Verbindung derartig ausgebildet, dass diese werkzeuglos lösbar ist. Darüber hinaus ist durch einen mehrteiligen Aufbau des Koppelelementes ein großer Abstand zwischen den miteinander koppelbaren Schwenkwellen realisierbar.

In einer weiteren bevorzugten Weiterbildung ist das Koppelelement zumindest teilweise kreisbogenförmig, insbesondere im Wesentlichen korrespondierend zu einem Umfang des Verteilerkopfes, ausgebildet. Besonders vorteilhaft ist eine durchgängige kreisbogenförmige Form des Koppelelementes. Somit ist bei einer Drehmomentübertragung ein besonders günstiger mechanischer Spannungsverlauf innerhalb des Koppelelementes erreicht. Spannungsspitzen, die eine besonders hohe Konzentration an Spannungen darstellen und typischerweise in Bereichen von Ecken und/oder Kerben entstehen, werden hierbei minimiert. Dies hat den Vorteil, dass die maximale mögliche Einsatzzeit des Koppelelementes deutlich gesteigert ist.

In einer besonders bevorzugten Ausführungsform ist das Koppelelement als eine elastisch verformbare Welle, insbesondere Biegewelle, ausgebildet. Die Welle ist hierbei zumindest abschnittsweise oder vorzugsweise vollständig aus einem flexiblen und/oder elastischen Metall- und/oder Kunststoffmaterial ausführbar. In vorteilhafter Weise ist hierdurch ein Koppelelement mit besonders kleinen Abmessungen realisierbar das auf der einen Seite wenig Bauraum beansprucht und auf der anderen Seite besonders Betriebssicher gegenüber Vibrationen und/oder Verschleiß ist.

In einer anderen besonders bevorzugten Weiterbildung ist das Koppelelement als eine Klauenkupplung ausgebildet. Die einzelnen Klauenkupplungselemente weisen hierbei mehrere fingerförmige Übertragungselemente auf, die von einem ersten Klauenkupplungselement in ein anderes Klauenkupplungselement zumindest teilweise eingreifen. Die einzelnen Klauenkupplungselemente sind derartig ausgebildet, dass durch den Versatz der Schwenkwellen zumindest zwei gegenüberliegende Übertragungselemente kraftübertragend miteinander gekoppelt sind. Ein entscheidender Vorteil besteht hierbei in dem großen Abstand des Kraftübertragungspunktes der Übertragungselemente und der Schwenkachse der Umschaltelemente. Durch den somit erreichten hohen Hebelarm sind die Belastungen zwischen den Übertragungselementen erheblich reduzierbar. Die Belastungen sind darüber hinaus durch eine gesteigerte Anzahl an fingerförmigen Übertragungselementen noch weiter reduzierbar.

Zur weiteren Reduzierung von Vibrationsübertragungen und/oder Verschleiß ist zwischen den fingerförmigen Übertragungselementen zumindest ein Dämpfungselement aus einem Kunststoffmaterial, vorzugsweise ElastomerMaterial, denkbar. Hierbei ist das Drehmoment nicht unmittelbar von einem ersten Übertragungselement auf ein weiteres Übertragungselement übertragbar, sondern über das zumindest eine Dämpfungselement.

In einer weiteren bevorzugten Ausführungsform ist das Koppelelement als eine Gelenkwelle, beispielsweise als ein Kreuz- und/oder Kardan- und/oder Winkelund/oder Kugelgelenk, ausgebildet. Hierbei weist das Koppelelement zumindest eines der vorgenannten Gelenke auf. Mit dieser Ausführungsform sind Kraftübertragungen mit besonders großem Winkelversatz der Schwenkwellen erreichbar. Ein weiterer besonderer Vorteil ist, dass mittels der Gelenkwelle eine Verschiebung der Schwenkwellen in der Vertikalen ermöglicht ist. Die vertikalen Verschiebungen der Schwenkwellen sind insbesondere auf die Vibrationen, aufgrund der Kraftübertragungen zwischen der typischerweise unebenen landwirtschaftlichen Ackerfläche und Rädern der Verteilmaschine, zurückzuführen. Die Vibrationen breiten sich hierbei von den Rädern der landwirtschaftlichen Verteilmaschine bis zum Verteilerkopf und somit den Ausgangsöffnungen und/oder Ausbringleitungen aus.

In einer weiteren bevorzugten Weiterbildung ist das Koppelelement als ein zumindest teilweise flexibles Blechumform- und/oder Kunststoffteil ausgebildet. Das Koppelelement ist hierbei aus zumindest einem Teil oder aus mehreren Teilen, die miteinander gekoppelt sind, ausführbar, wobei zumindest ein Teil der mehrteiligen Ausführungsform als ein dünnwandiges Blechteil und/oder als ein flexibles Kunststoffteil ausgebildet ist. Insbesondere durch den flexiblen Teil des Koppelelementes ist der Winkel-Versatz zwischen den zumindest zwei benachbarten Schwenkwellen und/oder Verschiebungen aufgrund von beispielsweise Vibrationen kompensierbar. Diese Ausführungsform zeichnet sich insbesondere durch eine wirtschaftliche Herstellbarkeit aus.

In einer weiteren bevorzugten Ausführungsform des erfindungsgemäßen Verteilerkopfes ist das Koppelelement als eine magnetische Kupplung ausgebildet. Das Koppelelement ist hierbei aus zumindest zwei Teilen ausführbar. An einem ersten Teil des Koppelelementes ist ein erstes magnetisches Element und an zumindest einem zweiten Teil ein zweites magnetisches Element angeordnet. Darüber hinaus ist denkbar, dass zumindest eines der zumindest zwei magnetischen Elemente in zumindest einer der miteinander gekoppelten Schwenkwellen integriert ist. Die magnetischen Elemente sind dabei derart ausgebildet, dass eine Drehmomentübertragung zwischen den beiden magnetischen Elementen ausführbar ist. Von Vorteil ist hierbei die nahezu verschleißfreie Drehmomentübertragung innerhalb des Koppelelementes.

Weitere Einzelheiten der Erfindung sind der Beispielsbeschreibung und den Zeichnungen zu entnehmen. Die Zeichnungen zeigen
Fig. 1 ein Ausführungsbeispiel der erfindungsgemäßen landwirtschaftlichen pneumatischen Verteilmaschine in einer perspektivischen Darstellung;
Fig. 2 den Verteilerkopf der in der Fig. 1 dargestellten Verteilmaschine in einer perspektivischen Darstellung;
Fig. 3 eine erste alternative Ausführungsform des erfindungsgemäßen Koppelelementes in einer perspektivischen Darstellung;
Fig. 4 eine zweite alternative Ausführungsform des erfindungsgemäßen Koppelelementes in einer perspektivischen Darstellung; und
Fig. 5 eine dritte alternative Ausführungsform des erfindungsgemäßen Koppelelementes in einer perspektivischen Darstellung.

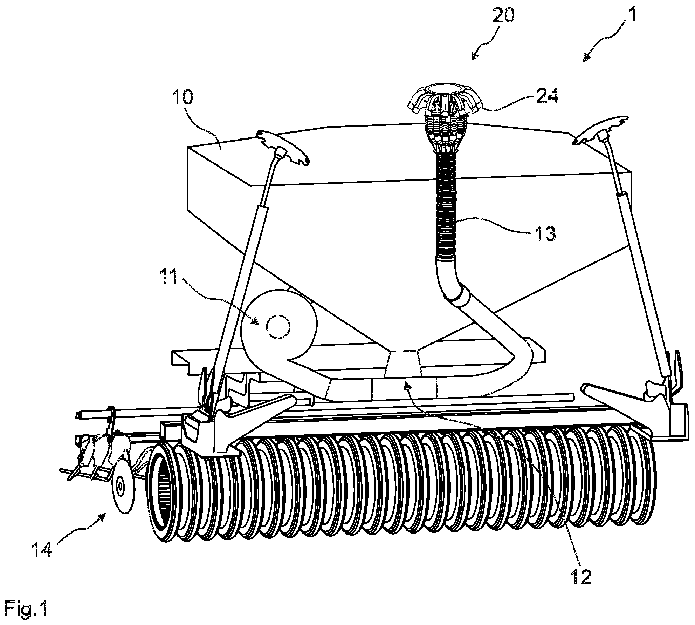

Eine landwirtschaftliche pneumatische Verteilmaschine 1 zum Ausbringen von granularem Material, insbesondere Saatgut, auf einer landwirtschaftlichen Fläche ist in der Fig. 1 gezeigt.

Die Verteilmaschine 1 umfasst neben einem Vorratsbehälter 10, der zum Vorhalten des granularen Materials dient, ein Fördergebläse 11 und ein Dosierorgan 12. Das Dosierorgan 12 ist dazu eingerichtet, das granulare Material in einstellbaren Mengen in eine Zuführleitung 13, die das Dosierorgan 12 und einen Verteilerkopf 20 miteinander verbindet, einzuspeisen. Mittels des Gebläses 11 wird das granulare Material, in Form eines Luft-Material-Gemisches, innerhalb der Zuführleitung 13 zum Verteilerkopf 20 transportiert. Ausgehend vom Verteilerkopf 20 wird das granulare Material über nicht dargestellte Ausbringleitungen 25 zu mehreren als Säscharen ausgebildeten Ausbringelementen 14 geführt und über diese auf der landwirtschaftlichen Fläche, vorzugsweise in einer Furche eines Ackerbodens, abgelegt.

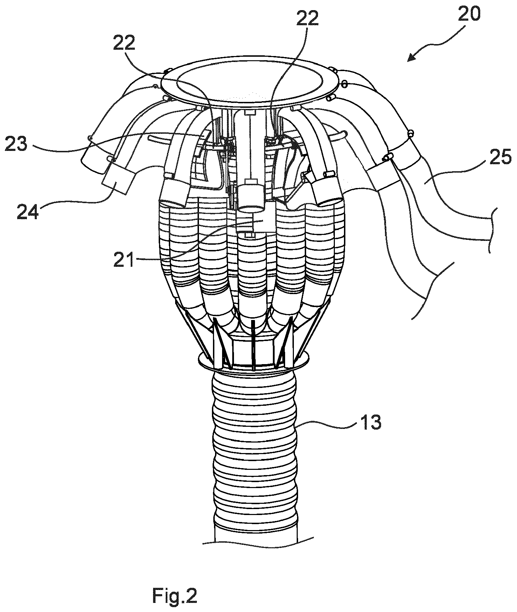

Die Ausbringung des granularen Materials ist über den in der Fig. 2 gezeigten Verteilerkopf 20, in Abhängigkeit einer vorgegebenen Verteilercharakteristik, steuer- und/oder regelbar. Somit werden durch den Verteilerkopf 20 nur an die Ausbringelemente 14 granulares Material übergeben, aus denen das Material tatsächlich auszubringen ist. Hierfür weist der Verteilerkopf 20 radial an seinem Umfang mehrere Ausbringöffnungen 24 mit daran anschließenden Ausbringleitungen 25 auf, die mittels eines Umschaltelementes 23 absperrbar sind. Die Umschaltelemente 23 sind hierbei mittels einer Schwenkwelle um eine im Wesentlichen horizontal ausgerichtete Schwenkachse in eine geöffnete oder geschlossene Stellung verschwenkbar. Ausgangsöffnungen 24 und/oder Ausbringleitungen 25 die jeweils einem Ausbringelement 14 zugeordnet sind, welches beispielsweise einen Randbereich oder eine Fahrgasse überschneidet, sind somit individuell absperrbar.

Die Umschaltelemente 23 benachbarter Ausgangsöffnungen 24 sind durch ein Koppelelement 22, das in dieser beispielhaften Ausführungsform als elastische verformbare Welle, insbesondere Biegewelle, die korrespondierend zum Umfang des Verteilerkopfes 20 ausgebildet ist, drehfest miteinander verbunden. Somit ist zur Betätigung von mindestens zwei oder wie in Fig. 2 dargestellt drei Umschaltelementen 23 nur ein gemeinsamer Aktor 21 erforderlich. Darüber hinaus sind Ausführungsformen denkbar in denen mehr als drei Umschaltelemente 23 miteinander gekoppelt und von zumindest einem gemeinsamen Aktor 21 betätigbar sind. Außerdem sind mittels des Koppelementes 22 die von dem Aktor 21 eingeleiteten Drehmomente über mehrere im Winkel-Versatz stehende Schwenkwellen, übertragbar.

Neben der in Fig. 2 gezeigten einteiligen Ausführungsform des Koppelelementes 22, sind Ausführungsformen denkbar, die mehrteilig ausgebildet sind, wie nachfolgend beschrieben.

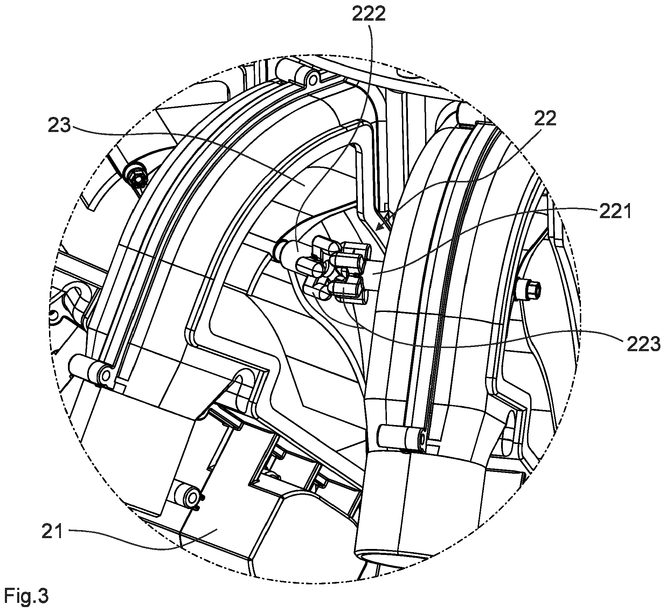

In der Fig. 3 ist eine erste alternative Ausführungsform mit zweiteiligem Aufbau des Koppelelementes 22 gezeigt. Das Koppelelement 22 ist hierbei als eine Klauenkupplung mit zwei zueinander im Winkel versetzter Klauenelemente 221, 222 ausgebildet. Die Klauenelemente 221, 222 weisen mehrere ineinander greifende Übertragungselemente 223 auf. Ein Übertragungselement 223 eines ersten Klauenelementes 221 das dem Aktor 21 zugeordnet und/oder von diesem angetrieben ist übergibt dabei das vom Aktor 21 initiierte Drehmoment über eine Kontaktfläche an ein benachbartes Übergabeelement 223 eines zweiten Klauenelementes 222. Die Kontaktfläche der Übergabeelemente 223 ist dabei exzentrisch zur Schwenkachse der Schwenkwellen angeordnet, so dass ein Hebelarm zwischen der Kontaktfläche und der Schwenkachse erreicht ist. Somit können die einzelnen Übergabeelemente 223 deutlich entlastet werden, um so die Lebensdauer des Koppelelementes 22 zu erhöhen.

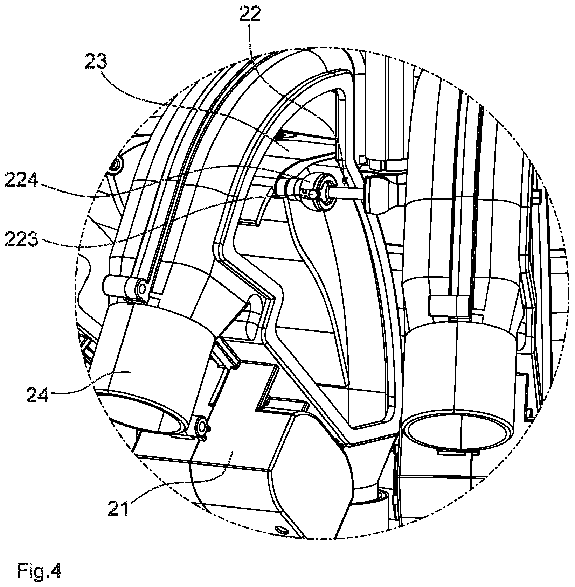

Die Fig. 4 zeigt ein nach dem Prinzip einer Gelenkwelle, insbesondere Kardanund/oder Kugelgelenkwelle, ausgeführtes Koppelelement 22. Das Koppelelement 22 weist hierbei kugelförmige Halbschalen 224 auf, die mit den Schwenkwellen der Umschaltelemente 23 gekoppelt sind. Die kugelförmigen Halbschalen 224 sind über eine Welle, die an ihren beiden Seiten kugelförmige Enden aufweist kraftübertragend miteinander verbunden. Dies wird erreicht durch an den Kugeln herausstehende Übertragungselemente 223, die in eine Aussparung der kugelförmigen Halbschalen 224 eingreifen.

Alternativ zu der Ausführungsform des Koppelelementes 22 in Fig. 4 sind weitere Gelenkwellen, wie beispielsweise Kreuz- und/oder Winkelgelenkwellen, die einen Winkel-Versatz zulassen, denkbar.

Außerdem können die Schwenkwellen zweier benachbarter Umschaltelemente 23 magnetisch mittels einer Magnetkupplung miteinander gekoppelt sein. Die miteinander in Verbindung stehenden Umschaltelemente 23 sind somit mechanisch voneinander entkoppelt. Hierdurch ist erreicht, dass die Drehmomente zwischen den miteinander gekoppelten Schwenkwellen besonders reibungsarm übertragbar sind. Auch gegensätzliche Verschiebung der Schwenkwellen sind somit nahezu Beschädigungsfrei kompensierbar.

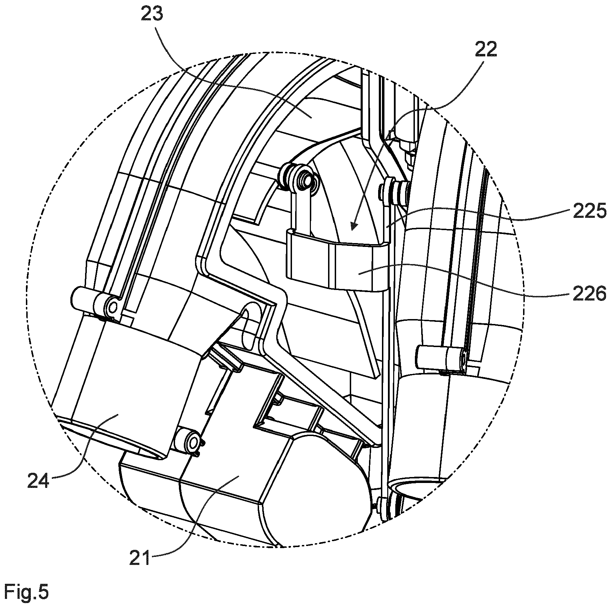

Eine besonders wirtschaftliche Ausführungsform des Koppelelementes 22 ist in der Fig. 5 dargestellt. Dieses ist als ein umgeformtes Blechteil mit durchgehend gleicher Dicke ausgebildet. Das Blechteil weist neben zwei seitlich angebrachten Schenkel 225, die jeweils mit einer Schwenkwelle zweier benachbarter Umschaltelemente 23 gekoppelt sind, einen die beiden Schenkel 225 verbindenden flexiblen Bereich 226 auf. Der flexible Bereich 226 dient zur Überbrückung des Winkelversatzes zwischen den beiden miteinander gekoppelten Schwenkwellen. In vorteilhafter Weise ist die Dicke des Koppelelementes 22 hierbei so gewählt, dass die vom Aktor 21 initiierten Drehmomente von einer ersten Schwenkwelle auf eine zweite Schwenkwelle übertragbar sind und die Flexibilität dabei gleichzeitig ausreichend ist, dass zwei miteinander gekoppelte Schwenkwellen axial und/oder radial zueinander verschiebbar sind. Dies ist gerade während der Fortbewegung auf einem unebenen landwirtschaftlichen Ackerboden von entscheidender Bedeutung.

### Bezugszeichenliste

- 1: Landwirtschaftliche pneumatische Verteilmaschine
- 10: Vorratsbehälter
- 11: Fördergebläse
- 12: Dosierorgan
- 13: Zuführleitung
- 14: Ausbringelement, Säschar
- 20: Verteilerkopf
- 21: Aktor
- 22: Koppelelement
- 221: Erstes Klauenelement
- 222: Zweites Klauenelement
- 223: Übertragungselement
- 224: Kugelförmiges Halbschalenelement
- 225: Schenkel
- 226: Flexibler Bereich
- 23: Umschaltelement
- 24: Ausgangsöffnung
- 25: Ausbringleitung

## Patentansprüche

1. Pneumatisch arbeitende Verteilmaschine (1) zum Verteilen von granularem Material, insbesondere Saatgut und/oder Dünger, auf einer landwirtschaftlichen Fläche, umfassend zumindest einen zumindest teilweise kreisförmig ausgebildeten Verteilerkopf (20), dem über zumindest eine Zuführleitung (13) das zu verteilende Material in einstellbaren Mengen zuführbar ist und der mehrere radial angeordnete Ausgangsöffnungen (24) und daran sich anschließende Ausbringleitungen (25) aufweist, wobei zumindest einigen Ausgangsöffnungen (24) und/oder Ausbringleitungen (25) jeweils zumindest ein um eine im Wesentlichen horizontal ausgerichtete Schwenkachse zwischen zumindest einer geöffneten und einer geschlossenen Stellung mittels zumindest einer Schwenkwelle verschwenkend verstellbares Umschaltelement (23) zugeordnet ist, wobei die Schwenkachsen der Schwenkwellen zumindest zweier Umschaltelemente (23) von zumindest zwei benachbarten Ausgangsöffnungen (24) und/oder Ausbringleitungen (25) mit einem Winkel zueinander, versetzt ausgerichtet sind, und wobei die Schwenkwellen der Umschaltelemente (23) von motorischen Aktoren (21) betätigbar sind, **wobei** zumindest zwei Umschaltelemente (23) von jeweils zumindest zwei der mehreren Ausgangsöffnungen (24) gemeinsam über zumindest ein Koppelelement (22), welches eine drehmomentübertragende Koppelung, mit einem Winkel-Versatz der Schwenkwellen, zulässt, verschwenkbar sind, so dass zumindest zwei Umschaltelemente (23) über zumindest einen gemeinsamen Aktor (21) betätigbar sind, **gekennzeichnet durch** eine unmittelbare Kopplung der jeweiligen Schwenkwellen benachbarter Umschaltelemente mittels des Koppelelementes.

2. Verteilmaschine (1) nach Anspruch 1, **dadurch gekennzeichnet, dass** das Koppelelement (22) als die Schwenkwellen drehfest miteinander verbindendes Mittel ausgebildet ist.

3. Verteilmaschine (1) nach zumindest einem der vorgenannten Ansprüche, **dadurch gekennzeichnet, dass** das Koppelelement (22) einteilig oder aus zumindest zwei Teilen gebildet ist die vorzugsweise formschlüssig miteinander verbunden sind.

4. Verteilmaschine (1) nach zumindest einem der vorgenannten Ansprüche, **dadurch gekennzeichnet, dass** das Koppelelement (22) zumindest teilweise kreisbogenförmig, insbesondere im Wesentlichen korrespondierend zu einem Umfang des Verteilerkopfes (20), ausgebildet ist.

5. Verteilmaschine (1) nach zumindest einem der vorgenannten Ansprüche, **dadurch gekennzeichnet, dass** das Koppelelement (22) als eine elastisch verformbare Welle, insbesondere Biegewelle, ausgebildet ist.

6. Verteilmaschine (1) nach zumindest einem der Ansprüche 1 - 4, **dadurch gekennzeichnet, dass** das Koppelelement (22) als eine Klauenkupplung ausgebildet ist.

7. Verteilmaschine (1) nach zumindest einem der Ansprüche 1 - 4, **dadurch gekennzeichnet, dass** das Koppelelement (22) als eine Gelenkwelle, beispielsweise als ein Kreuz- und/oder Kardan- und/oder Winkel- und/oder Kugelgelenk, ausgebildet ist.

8. Verteilmaschine (1) nach zumindest einem der Ansprüche 1 - 4, **dadurch gekennzeichnet, dass** das Koppelelement (22) als ein zumindest teilweise flexibles Blechumform- und/oder Kunststoffteil ausgebildet ist.

9. Verteilmaschine (1) nach zumindest einem der Ansprüche 1 - 4, **dadurch gekennzeichnet, dass** das Koppelelement (22) als eine magnetische Kupplung ausgebildet ist.

## Claims

1. Pneumatic distribution machine (1) for distributing granular material, in particular seed and/or fertilizer, over an agricultural surface, comprising at least one distributor head (20) which is designed to be at least partially circular, to which the material to be distributed can be supplied in adjustable amounts via at least one feed line (13), and which comprises a plurality of radially arranged outlet openings (24) and discharge lines (25) which adjoin thereto, at least some outlet openings (24) and/or discharge lines (25) being assigned in each case at least one switching element (23) which can be pivotally adjusted around a substantially horizontal pivot axis between at least one open and one closed position by means of a pivot shaft, the pivot axes of the pivot shafts of at least two switching elements (23) being aligned offset from at least two adjacent outlet openings (24) and/or discharge lines (25) at an angle to one another, and the pivot shafts of the switching elements (23) being operable by motorized actuators (21), at least two switching elements (23) of in each case at least two of the plurality of outlet openings (24) being jointly pivotable via at least one coupling element (22) which allows a torque-transmitting coupling, with an angular offset, of the pivot shafts, so that at least two switching elements (23) are operable via at least one common actuator (21), **characterized by** a direct coupling of the respective pivot shafts of adjacent switching elements by means of the coupling element.

2. Distribution machine (1) according to claim 1, **characterized in that** the coupling element (22) is designed as a means which connects the pivot shafts for conjoint rotation.

3. Distribution machine (1) according to at least one of the preceding claims, **characterized in that** the coupling element (22) is formed in one part or from at least two parts which are preferably connected to one another in a positive-locking manner.

4. Distribution machine (1) according to at least one of the preceding claims, **characterized in that** the coupling element (22) is designed to be at least partially arc-shaped, in particular substantially corresponding to a circumference of the distributor head (20).

5. Distribution machine (1) according to at least one of the preceding claims, **characterized in that** the coupling element (22) is designed as an elastically deformable shaft, in particular a bending shaft.

6. Distribution machine (1) according to at least one of claims 1-4, **characterized in that** the coupling element (22) is designed as a claw coupling.

7. Distribution machine (1) according to at least one of claims 1-4, **characterized in that** the coupling element (22) is designed as a joint shaft, for example as a cross joint and/or Cardan joint and/or angular joint and/or ball joint.

8. Distribution machine (1) according to at least one of claims 1-4, **characterized in that** the coupling element (22) is designed as an at least partially flexible sheet-metal-forming and/or plastics material part.

9. Distribution machine (1) according to at least one of claims 1-4, **characterized in that** the coupling element (22) is designed as a magnetic coupling.

## Revendications

1. Machine de distribution à fonctionnement pneumatique (1) pour la distribution de matériau granulaire, en particulier de semences et/ou d'engrais, sur une surface agricole, comprenant au moins une tête de distributeur (20) conçue au moins partiellement circulaire, laquelle peut être alimentée en matériau à distribuer en quantité réglable à travers au moins une conduite d'alimentation (13) et laquelle présente plusieurs ouvertures de sortie (24) disposées radialement et des conduites de sortie (25) s'y raccordant, au moins un élément de commutation (23) réglable entre au moins une position ouverte et une position fermée par pivotement au moyen d'au moins un arbre de pivotement autour d'un axe de pivotement orienté essentiellement horizontalement étant respectivement associé à au moins quelques ouvertures de sortie (24) et/ou conduites de sortie (25), les axes de pivotement des arbres de pivotement d'au moins deux éléments de commutation (23) d'au moins deux ouvertures de sortie (24) et/ou conduites de sortie (25) adjacentes étant orientés de manière décalée avec un angle entre eux, et les arbres de pivotement des éléments de commutation (23) pouvant être actionnés par des actionneurs à moteur (21), au moins deux éléments de commutation (23) de respectivement au moins deux des plusieurs ouvertures de sortie (24) pouvant être pivotés ensemble à travers au moins un élément de couplage (22), lequel permet un couplage à transmission de couple avec un décalage angulaire des arbres de pivotement, de sorte qu'au moins deux éléments de commutation (23) peuvent être actionnés à travers au moins un actionneur (21) commun, **caractérisée par** un couplage direct des arbres de pivotement respectifs d'éléments de commutation adjacents au moyen de l'élément de couplage.

2. Machine de distribution (1) selon la revendication 1,
**caractérisée en ce que** l'élément de couplage (22) est conçu comme un moyen reliant entre eux les arbres de pivotement de manière solidaire en rotation.

3. Machine de distribution (1) selon au moins l'une des revendications précédentes, **caractérisée en ce que** l'élément de couplage (22) est formé d'une pièce ou d'au moins deux pièces, lesquelles sont de préférence reliées entre elles par complémentarité de forme.

4. Machine de distribution (1) selon au moins l'une des revendications précédentes, **caractérisée en ce que** l'élément de couplage (22) est conçu au moins partiellement en forme d'arc de cercle, en particulier correspondant essentiellement à une circonférence de la tête de distributeur (20).

5. Machine de distribution (1) selon au moins l'une des revendications précédentes, **caractérisée en ce que** l'élément de couplage (22) est conçu comme un arbre élastiquement déformable, en particulier un arbre flexible.

6. Machine de distribution (1) selon au moins l'une des revendications 1 à 4, **caractérisée en ce que** l'élément de couplage (22) est conçu comme un accouplement à griffes.

7. Machine de distribution (1) selon au moins l'une des revendications 1 à 4, **caractérisée en ce que** l'élément de couplage (22) est conçu comme un arbre articulé, par exemple comme un joint universel et/ou un joint de cardan et/ou un joint coudé et/ou un joint à rotule.

8. Machine de distribution (1) selon au moins l'une des revendications 1 à 4, **caractérisée en ce que** l'élément de couplage (22) est conçu comme une pièce en tôle et/ou en plastique au moins partiellement flexible.

9. Machine de distribution (1) selon au moins l'une des revendications 1 à 4, **caractérisée en ce que** l'élément de couplage (22) est conçu comme un accouplement magnétique.
